# EUROPÄISCHE PATENTANMELDUNG

(11) **EP 4 521 754 A1**
(43) Veröffentlichungstag der Anmeldung: **12.03.2025**
(21) Anmeldenummer: 24199116.5
(22) Anmeldetag: 09.09.2024
(51) Int. Cl.: H04N 21/41, H04N 21/422, H04N 21/488, H04N 21/6543, H04N 21/658, H04N 21/6583, H04N 21/81

(54) **VERFAHREN ZUM BENACHRICHTIGEN EINES BENUTZERS ÜBER EIN EREIGNIS, BEISPIELSWEISE IM KATASTROPHENFALL**

(30) Priorität: 11.09.2023 DE 102023124465
(71) Anmelder: FM Marketing GmbH, 5202 Neumarkt am Wallersee (AT)
(72) Erfinder: Maier, Ferdinand, 5202 Neumarkt am Wallersee (AT); Langdon, Chris, Burnaby, BC V5E4E7 (CA)
(74) Vertreter: von Bülow & Tamada

(57) **Zusammenfassung**

Die Erfindung betrifft ein Verfahren zum Benachrichtigen eines Benutzers über ein Ereignis (14) umfasst die Schritte:
- Empfangen einer auf dem Ereignis (14) basierenden Push-Nachricht (50) mit einer Gestaltungsinformation (28), die die Gestaltung einer CTA-Taste (26) genannten Call-To-Action-Taste auf einer Fernbedienung (6) zumindest bereichsweise beschreibt;
- Generieren eines Push-Befehls (52), mit dem ein Signalgeber (8) angewiesen wird, den Benutzer aufzufordern, die CTA-Taste (26) auf der Fernbedienung (6) zu bedienen; und
- Generieren einer Gestaltungsanweisung (54), mit der die Fernbedienung (6) angewiesen wird, die Fernbedienung (6) im Bereich der CTA-Taste (26) basierend auf der Gestaltungsinformation (28) zu gestalten;
- Versenden des Push-Befehls (52) an den Signalgeber (8);
- Versenden der Gestaltungsanweisung (54) an die Fernbedienung (6); und
- Empfangen einer die Bedienung der CTA-Taste (26) durch den Benutzer anzeigenden Bedienungsrückmeldung (56).

## Beschreibung

Die vorliegende Erfindung betrifft Verfahren zum Benachrichtigen eines Benutzers über ein Ereignis, eine Steuervorrichtung zur Durchführung des Verfahrens und ein System mit der Steuervorrichtung.

Die US2015100167AA offenbart ein Smart-Home-System mit einer Fernbedienung, auf der Lens-Buttons genannte spezielle Tasten mit einer transparenten Oberfläche angeordnet sind. Sie können neben der Eingabe von Befehlen auch als visuelle Indikatoren dienen. Ein hinter den Buttons eingebauter Lichtring kann den Zustand von Smart-Geräten anzeigen. Das Smart-Home-System umfasst ferner einen Gefahrenmelder mit sieben verschiedenen Sensoren, darunter Rauch-, Hitze-, und Kohlenmonoxidsensoren zur Auslösung von Alarmsignalen und Ausgabe von Sprachmeldungen mit Handlungsaufforderungen (Call-to-Action), um einen Benutzer darüber zu informieren, welche Art von Gefahr (z.B. Rauch oder Kohlenmonoxid) erkannt wurde und wo diese Gefahr lokalisiert ist (z.B. im Wohnzimmer oder Schlafzimmer). Die Handlungsaufforderungen enthalten spezifische Anweisungen für das weitere Vorgehen, wie zum Beispiel "Verlassen Sie jetzt den Raum" oder "Gehen Sie an die frische Luft".

Die US 2004 / 0 107 444 A1 offenbart, eine Taste sowohl auf einer Fernbedienung als auch auf einem Fernseher hervorzuheben, um einen Benutzer sowohl über die Fernbedienung als auch über den Fernseher zu leiten und sicherzustellen, dass die richtige Taste gedrückt wird. Beide Anzeigen - auf der Fernbedienung und auf dem Fernseher - arbeiten zusammen, um den Benutzer zu führen.

Die US 2016 / 0 044 383 A1 offenbart die Anzeige einer Call-to-Action-Schaltfläche auf dem Fernseher, die den Benutzer zur Teilnahme an einem E-Commerce-Ereignis auffordert. Die Interaktion erfolgt über die Fernbedienung, wobei der Benutzer eine Aktion bestätigt, die dann ein weiteres Gerät (z. B. ein Tablet) einbeziehen kann.

Die US 2017 / 0 153 790 A1 offenbart ein System zur Vorfallverwaltung, das es einem Benutzer ermöglicht, über ein mobiles Gerät auf eine Alarmmeldung zu reagieren. Die Alarmmeldung wird durch das Netzwerk an das mobile Gerät gesendet, wo sie auf einer Karte angezeigt wird, zusammen mit Symbolen für relevante Notdienste in der Nähe des Alarms. Das System ermöglicht die direkte Kommunikation mit diesen Notdiensten über das mobile Gerät. Eine Bestätigung des Alarms durch den Benutzer kann ebenfalls erfasst und an den Server zurückgesendet werden, um sicherzustellen, dass der Vorfall erkannt wurde.

US 2018 / 0 098 109 A1 offenbart ein System, bei dem eine Fernbedienung mit Touchscreen zur Steuerung eines Bildanzeigegeräts verwendet wird. Die Fernbedienung zeigt Geräteeinstellungen und Funktionen an, ermöglicht Mikrosteuerung und reduziert physische Tasten. Die Interaktionen zwischen Fernbedienung und Anzeigegerät erfolgen lokal, ohne zentrale Überwachung der Benutzeraktivität.

Die US 2004 / 0 113 892 A1 offenbart eine Fernbedienung, die es dem Benutzer ermöglicht, Tastenbeschriftungen auf einem Touchscreen-Display anzupassen. Wenn eine Taste betätigt wird, zeigt ein Display den benutzerdefinierten Namen oder das Label der Taste an, was besonders bei Universalfernbedienungen nützlich ist, um die tatsächliche Funktion einer Taste darzustellen. Es werden zwei Hauptmodi beschrieben: ein Lernmodus, in dem Benutzer nach dem Lernen einer neuen Funktion ein Label erstellen können, und ein Setup-Modus, in dem Tastenlabels jederzeit angepasst werden können.

Die Aufgabe der Erfindung besteht darin, den Gegenstand in folgender technischer Hinsicht zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Benachrichtigen eines Benutzers über ein Ereignis die Schritte:
- Empfangen einer auf dem Ereignis basierenden Push-Nachricht mit einer Gestaltungsinformation, die die Gestaltung einer CTA-Taste genannten Call-To-Action-Taste auf einer Fernbedienung zumindest bereichsweise beschreibt;
- Generieren eines Push-Befehls, mit dem ein Signalgeber angewiesen wird, den Benutzer aufzufordern, die CTA-Taste auf der Fernbedienung zu betätigen; und
- Generieren einer Gestaltungsanweisung, mit der die Fernbedienung angewiesen wird, die Fernbedienung im Bereich der CTA-Taste basierend auf der Gestaltungsinformation zu gestalten;
- Versenden des Push-Befehls an den Signalgeber;
- Versenden der Gestaltungsanweisung an die Fernbedienung; und
- Empfangen einer die Bedienung der CTA-Taste durch den Benutzer anzeigenden Bedienungsrückmeldung, und/oder
- Versenden einer die Bedienung der CTA-Taste (26) durch den Benutzer anzeigenden Nachricht (58) an ein Steuersystem (36).

Unter einer auf einem Ereignis basierenden und über das Ereignis informierenden Push-Nachricht soll nachstehend eine automatisierte Mitteilung verstanden werden, die in Echtzeit an ein Endgerät, wie eine Set-Top-Box, gesendet wird, um über ein spezifisches, auslösendes Ereignis zu informieren. Diese Benachrichtigung wird durch vordefinierte Kriterien oder Trigger-Mechanismen ausgelöst, die auf veränderte Bedingungen, wichtige Vorkommnisse oder andere relevante Ereignisse reagieren. Der Zweck der Benachrichtigung kann je nach Kontext variieren und reicht von dringenden Warnungen in Notfallsituationen bis hin zu werblichen Mitteilungen. Demgegenüber ist ein steuernder Push-Befehl eine Form der Nachrichtenübertragung, die, im Gegensatz zur informierenden Push-Nachricht, eine spezifische Aktion auf dem Signalgeber auslöst.

Eine Call-to-Action-Taste, nachstehend CTA-Taste genannt, ist eine Taste auf einer Fernbedienung oder einer interaktiven Schaltfläche in einer Benutzeroberfläche zu verstehen, die dazu dient, den Benutzer zu einer bestimmten Aktion zu bewegen oder zu leiten. Diese Tasten sind in der Regel auffällig gestaltet und können kurze, prägnante Texte enthalten, die den Benutzer zur Interaktion auffordern, wie z.B. "Sofort Hilfe anfordern", "Alarm auslösen" oder "Notruf senden" usw. Die CTA-Taste kommt als Gestaltungselement aus dem Design von Webseiten, Apps und anderen Benutzeroberflächen und spielt eine entscheidende Rolle in der Benutzerführung und Conversion-Optimierung. Durch einen Klick auf die CTA-Taste wird in der Regel ein bestimmtes Ziel erreicht, in dem etwa die nächstgelegenen Rettungskräfte alarmiert werden, automatisch ein vordefinierter Notruf abgesetzt wird oder spezielle Sicherheitsprotokolle in Gang gesetzt werden. Die CTA-Taste soll im Zusammenhang mit der nachstehend beschriebenen Erfindung nicht einschränkend verstanden werden.

Dem angegebenen Verfahren liegt die Überlegung zugrunde, dass das eingangs genannte Smart-Home-System zwar in der Lage ist, grundsätzlich Meldungen, wie sie im dort verwendeten Notfallmanagementszenario auftreten, zu verarbeiten und an einen Benutzer des Smart-Home-Systems auszugeben, ob diese Meldungen allerdings wirklich wahrgenommen worden sind, kann mit dem eingangs genannten Smart-Home-System nicht festgestellt werden.

Hier greift das angegebene Verfahren mit der Idee an, neben der eigentlichen Meldung des Ereignisses auch eine Aufforderung an den Benutzer zu senden, mit der CTA-Taste auf seiner Fernbedienung zu betätigen, die ihm angezeigt wird. Auf diese Weise lässt sich mit dem Empfang einer Rückmeldung klären, ob der Benutzer das Ereignis auch tatsächlich wahrgenommen hat. Im Falle einer Notfallmeldung als Ereignis beispielsweise können so Benutzer erkannt werden, die den entsprechenden Notfall aus welchen Gründen auch immer nicht zur Kenntnis nehmen, um diesen im Ernstfall bei einzuleitenden Notfallmaßnahmen besondere Aufmerksamkeit zukommen zu lassen. Dabei ist es egal, ob die Rückmeldungen der Benutzer in einem zentralen Server gesammelt oder vor Ort weiterverarbeitet werden, um beispielsweise durch Einschalten von lokalen Warnsignalgebern basierend auf der Rückmeldung die Nachbarschaft zu warnen. In jedem Fall kann in einem Notfall die Bestätigung mit der CTA-Taste, dass die Push-Nachricht wahrgenommen wurde, dazu beitragen, dass Rettungsdienste oder andere Notfallhelfer effizienter eingesetzt werden, da sie, ob nun zentral gesammelt oder durch Anzeige über lokale Warnhinweisgeber, wissen, welche Haushalte bereits informiert sind und welche nicht.

In einer Weiterbildung des angegebenen Verfahrens umfasst der Push-Befehl die Gestaltungsinformation, wobei ein Bildschirm als Signalgeber angewiesen wird, ein Bild der CTA-Taste abzubilden. Auf diese Weise kann dem Benutzer eine intuitive Handlungsanweisung zur Betätigung der CTA-Taste gegeben werden, die er leicht versteht und unmittelbar umsetzen kann.

In einer zusätzlichen Weiterbildung des angegebenen Verfahrens wird das Bild der CTA-Taste über ein anderes Bild auf dem Bildschirm überlagert. Auf diese Weise lässt sich die Aufmerksamkeit des Benutzers am Bildschirm zur Aufforderung, die CTA-Taste zu betätigen, nutzen. Beispielsweise kann im Falle eines Wetterberichts mit der Ankündigung eines Unwetters so erfasst werden, wer die entsprechende Meldung zur Kenntnis genommen hat und wer nicht.

In einer weiteren Weiterbildung des angegebenen Verfahrens wird auf den Empfang der Bedienungsrückmeldung hin ein Programm ausgeführt. Auf diese Weise lässt sich auf die Betätigung der CTA-Taste mit geeigneten Maßnahmen reagieren und in Interaktion mit dem Benutzer treten. Im Falle des zuvor genannten Wetterberichts und der Ankündigung eines Unwetters lassen sich so erste Notfallmaßnahmen einleiten, wie beispielsweise das Angebot, den Benutzer über die aktuelle Wetterlage ständig auf dem Laufenden zu halten, durch ein Regenradarprogramm.

In einer besonderen Weiterbildung des angegebenen Verfahrens wird das Programm in Abhängigkeit von den Benutzer identifizierenden Daten ausgeführt. Auf diese Weise kann die zuvor genannte Interaktion mit dem Benutzer abgestimmt auf diesen erfolgen. Im Falle des zuvor genannten Wetterberichts und der Ankündigung eines Unwetters können die ersten Notfallmaßnahmen auf den Benutzer abgestimmt gestartet werden, um beispielsweise durch ein Telefonprogramm mit dem Benutzer direkt Kontakt aufzunehmen, wenn aufgrund seiner ihn identifizierenden Daten bekannt ist, dass er im Falle einer Katastrophe Hilfe benötigt.

In einer anderen besonderen Weiterbildung des angegebenen Verfahrens wird basierend auf der Bedienungsrückmeldung eine Nachricht erzeugt und an einen Server zurückgemeldet, wodurch sich die Interaktion mit den Benutzern koordinieren lässt. Auch ist es möglich, beispielsweise im Rahmen von als Test versendeten Push-Nachrichten mit A/B-Tests zu überprüfen, ob und wie das System auf bestimmte Benutzergruppen funktioniert. Zwar lässt sich bereits mit heutigen Methoden feststellen, ob und wie derartige Push-Nachrichten grundsätzlich in einer Gruppe wahrgenommen werden, dies ist allerdings nur mit Schätzungen gestützt auf Modelle und Beobachtungen möglich. Der große Vorteil des angegebenen Verfahrens liegt jedoch in einer unmittelbaren Messung, deren Ergebnis sofort vorliegt. Durch die Bestätigung der CTA-Taste kann sichergestellt werden, dass sich wünschenswerte Reaktionen oder sogar notwendige Maßnahmen, die eventuell ergriffen werden müssen (z.B. bei der Unwetterwarnung), auch wirklich so schnell wie möglich umsetzen lassen. Die Zeit zwischen Information und Reaktion durch wen auch immer kann dadurch deutlich verkürzt werden.

In einer bevorzugten Weiterbildung des angegebenen Verfahrens umfasst die Bedienungsrückmeldung Informationen zu einem Multimedia-Content, der auf dem Bildschirm unmittelbar vor der Abbildung der CTA-Taste wiedergegeben wird. Auf diese Weise lassen sich Rückschlüsse auf den Kenntnisstand des Benutzers ziehen, den er hatte, als er die CTA-Taste bedient hatte. Sollte beispielsweise die oben genannte Push-Nachricht an alle Nutzer eines Fernsehprogramms versendet werden, unabhängig davon, ob sie gerade den Wetterbericht mit der Unwetterwarnung sehen oder nicht, so kann abgeschätzt werden, ob sie sich der drohenden Gefahr bewusst sind.

In einer besonders bevorzugten Weiterbildung des angegebenen Verfahrens hat der Server zuvor die auf dem Ereignis basierende Push-Nachricht versendet. Auf diese Weise lassen sich vor allem bei den oben genannten Tests Rückkopplungen realisieren, die es ermöglichen, das System automatisiert zu optimieren.

Gemäß einem weiteren Aspekt der Erfindung ist eine Steuervorrichtung eingerichtet, um eines der angegebenen Verfahren durchzuführen.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte des angegebenen Verfahrens durchzuführen, wenn das Computerprogramm auf einem elektronischen Gerät oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, das angegebene Verfahren durchführt.

Gemäß einem weiteren Aspekt der Erfindung umfasst ein System eine der genannten Steuervorrichtungen, die Fernbedienung mit der CTA-Taste, und den Signalgeber, der bevorzugt der Bildschirm ist.

In einer besonderen Weiterbildung des Systems ist die Steuervorrichtung eine Set-Top-Box. Im Vergleich zu anderen Kommunikationskanälen ist diese Form der Direktkommunikation mit dem Benutzer kostengünstiger, weil sie über eine bereits vorhandene Infrastruktur implementiert wird.

In einer bevorzugten Weiterbildung des Systems ist die Steuervorrichtung eingerichtet, die auf dem Ereignis basierende Push-Nachricht mit der Gestaltungsinformation über das Internet zu empfangen, den Push-Befehl an den Signalgeber über eine HDMI-Verbindung genannte High-Definition Multimedia Interface-Verbindung zu senden, und die Gestaltungsanweisung an die Fernbedienung über eine BLE-Verbindung genannte Bluetooth-Low-Energy-Verbindung zu versenden.

Die oben beschriebenen Eigenschaften, Merkmale und Vorteile dieser Erfindung sowie die Art und Weise, wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine schematische Darstellung eines Systems aus einem Fernsehgerät und einer Fernbedienung,
Fig. 2 eine schematische Darstellung eines Netzwerks mit dem System der Fig. 1, und
Fig. 3 ein Sequenzdiagramm eines Verfahrens in dem Netzwerk der Fig. 2.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

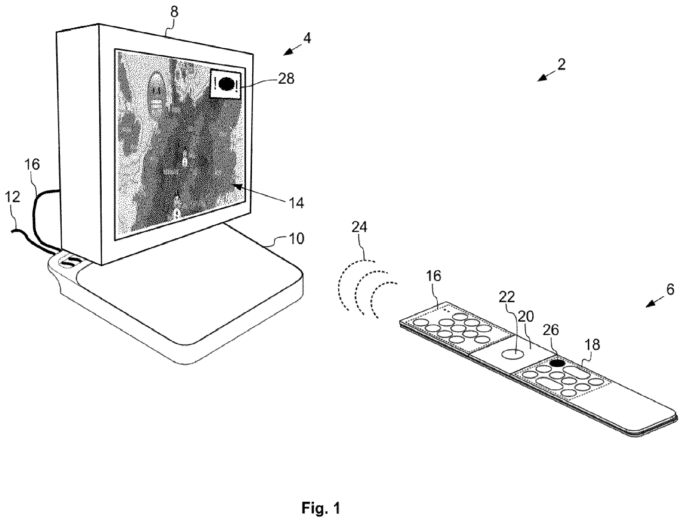

Es wird auf Fig. 1 Bezug genommen, die eine schematische Darstellung eines Systems 2 aus einem Fernsehgerät 4 und einer Fernbedienung 6 zeigt.

Das Fernsehgerät 4 umfasst einen Bildschirm 8, an den eine Set-Top-Box 10 angeschlossen ist. Die Set-Top-Box 10 empfängt über eine Netzwerkverbindung 12, die in Fig. 1 exemplarisch als Netzwerkkabel dargestellt ist, einen Datenstrom, in dem ein Video 14 enthalten ist. Die Set-Top-Box 10 filtert das Video 14 aus dem Datenstrom und gibt über ein Bildschirmkabel 16 ein das Video 14 tragende Videosignal an den Bildschirm 8 aus, um das Video 14 auf dem Bildschirm 8 wiederzugeben.

Bevor auf das Video 14 näher eingegangen wird, soll zunächst auf die Steuerung des Fernsehgerätes 4 mit der Fernbedienung 6 eingegangen werden.

Die Fernbedienung 4 umfasst ein erstes Tastenfeld 16 und ein zweites Tastenfeld 18, die über ein Steuerkreuz 20 voneinander getrennt sind. Mittig im Steuerkreuz 20 befindet sich eine Bestätigungstaste 22. Dieser Aufbau ist grundsätzlich bekannt und braucht nicht weiter erläutert zu werden. Die Tasten der Tastenfelder 16, 18 sowie das Steuerkreuz 20 und die Bestätigungstaste 22 werden zur Eingabe von Steuerbefehlen eingesetzt, um die Funktion des Fernsehgeräts 4 zu steuern. Hierzu werden die Eingaben in einem Übertragungssignal 24 an die Set-Top-Box 10 gesendet, die die Eingaben aus dem Übertragungssignal 24 filtert und dann zu den Eingaben entsprechende Funktionen auf dem Fernsehgerät 4, wie Lautstärkesteuerung, Programmwahl und dergleichen durchführt.

Eine besondere Taste auf der Fernbedienung, die in Fig. 1 schraffiert und mit dem Bezugszeichen 26 versehen ist, wird für eine besondere Funktion auf dem Fernsehgerät 4 verwendet. Die Idee ist, diese als Call-to-Action-Taste, nachstehend CTA-Taste 26 genannt, auszuführen und den Zuschauer und damit Benutzer der Fernbedienung 6 zu einer bestimmten Aktion zu bewegen oder zu leiten. In der vorliegenden Ausführung steht die bestimmte Aktion beispielhaft im Zusammenhang mit dem Video 14, das als Wetterbericht ausgeführt ist, welcher ein Unwetter in Form einer Kältewelle ankündigt. Die bestimmte Aktion hat zum Ziel, dass Zuschauer aktiv bestätigt, dass er Kenntnis von dem im Wetterbericht berichteten Unwetter genommen hat. Hierzu wird der mit einer entsprechenden Abbildung 28 der CTA-Taste 26, welche dem Video 14 überlagert ist, aufgefordert.

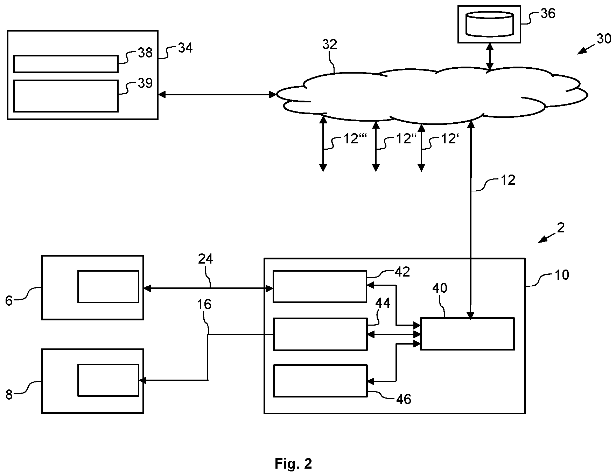

Zur Erläuterung einer Umsetzung dieser Idee wird auf Fig. 2 Bezug genommen, die ein Netzwerk 30 zeigt, in welches das System 2 aus Fig. 1 neben weiteren nicht gezeigten gleichartigen Systemen eingebunden ist. Diese weiteren eingebundenen Systeme sind in Fig. 2 durch weitere Netzwerkverbindungen 12', 12" und 12"' angedeutet.

Das System 2 und die weiteren Systeme sind in dem Netzwerk 30 über bidirektionale Netzwerkverbindungen als Netzwerkverbindungen 12 miteinander verbunden, was beispielsweise durch das Internet 32 realisiert werden kann. Die Netzwerkverbindungen sollten möglichst ausfallsicher sein, was beispielsweise durch Redundanz und/oder durch eine Satellitennetzwerkverbindung erreicht werden kann, wie sie die Firma Starlink bereitstellt. Zusätzlich ist in das Netzwerk 30 ein Programmiersystem 34 und ein Steuersystem 36 eingebunden, die zusammen die oben genannte Idee hinter der CTA-Taste 26 umsetzen.

In Abgrenzung dazu wird das oben beschriebene System 2 nachstehend Teilnehmersystem 2 bezeichnet.

Mit dem Programiersystem 34 werden nachstehend sogenannte Kampagnen definiert und verwaltet. Unter einer Kampagne soll nachstehend eine organisierte Aktion oder Reihe von Aktionen verstanden werden, mit der die Zuschauer des Videos 14 oder anderer Videos auf dem Bildschirm 8 dazu motiviert werden, die CTA-Taste 26 zu betätigen, mit dem Ziel, die Kenntnisnahme des Unwetters zu bestätigen. Eine Kampagne im Sinne der Offenbarung kann allerdings auch andere Ziele verfolgen, wie z.B. die Förderung eines Produkts oder Dienstleistung, einer Idee oder einer politischen Agenda. Zur Definition oder zur Steuerung einer Kampagne ist in dem Leitsystem 34 ein CMS 38 genanntes Content Management System implementiert, über welches ein Operator die notwendigen Programmierschritte durchführen kann. Die Programmierung ist an sich bekanntes Handwerk und hängt von der gewählten Programmiersprache ab. Daher soll hierauf nicht weiter eingegangen werden.

Am effizientesten lässt sich das System mit einem Abonnentensystem umsetzen, bei dem sich interessierte Teilnehmer registrieren. Dies hat vor allem den Vorteil, dass dadurch auch datenschutzrechtliche Probleme vermieden werden können, die entstehen, wenn Daten der Teilnehmer in für die Umsetzung der zuvor genannten Idee in notwendiger Weise erfasst werden. Ein weiterer Vorteil des Abonnentensystems ist, dass Teilnehmer ganz gezielt angesprochen werden können, wenn sie die Unwettermeldung in dem Video 14 betrifft. Hierzu steht in dem Leitsystem 34 ein Abonnentenverwaltungssystem 39 zur Verfügung, mit welchem sich die Teilnehmer eintragen, verwalten und gegebenenfalls löschen lassen. Zur eindeutigen Identifizierung eines Teilnehmers können im Abonnentenverwaltungssystem 39 beispielsweise die Identifikation der Set-Top-Box 10, die Identifikation der Fernbedienung 6 und die Identifikation des Haushalts, der das System 2 besitzt, hinterlegt werden.

Die Steuerung einer Kampagne übernimmt das Steuersystem 36. Hier werden die durch das Programmiersystem 34 programmierten Kampagnen verwaltet und beim Starten einer Kampagne mit vorab festgelegten Parametern ausgestattet, soweit es notwendig ist. Im Falle der oben genannten Unwetterwarnung kann dies beispielsweise die Ergänzung von vorab hinterlegten Informationstexten um Daten wie erwartete Temperatur und Uhrzeit sein. Ferner wird beim Starten einer Kampagne beispielsweise anhand der Identifikation der Set-Top-Box 10 der Teilnehmerkreis festgelegt, der mit der Kampagne angesprochen werden soll. Ein solcher Teilnehmerkreis wird nachstehend als Kohorte bezeichnet. Das Steuersystem 36 ist auch dafür verantwortlich, die Kampagnendaten wie die Identifikation der Kampagne, Mediendaten, Texte usw. an die einzelnen Set-Top-Boxen 10 zu senden. Um eine Kampagne auszuwerten, kann das Steuersystem 36 außerdem Auswertungsdaten von den einzelnen Teilnehmern der Kohorte empfangen, die insbesondere eine Rückmeldung darüber enthalten, auf welcher Fernbedienung 6 die CTA-Taste 26 betätigt wurde. Schließlich können mit dem Steuersystem 36 auch Evaluierungen, wie beispielsweise das bekannte A/B-Testing, durchgeführt werden.

Das Steuersystem 36 kommuniziert über die Netzwerkverbindung 12 mit einem Kampagnenverwaltungsservice 40 in der Set-Top-Box 10 des jeweiligen Teilnehmersystems 2, um die dort gestartete Kampagne zu steuern. Der Kampagnenverwaltungsservice 40 kann grundsätzlich als physische eigenständige Einheit ausgeführt sein, um beispielsweise ältere Set-Top-Boxen mit der Funktionalität gemäß der beschriebenen Idee nachzurüsten. Alternativ kann der Kampagnenverwaltungsservice 40 auch in der Set-Top-Box 10 als Programm implementiert sein, was aus Kostengründen bevorzugt wird. Um eine Kampagne auf Teilnehmerseite zu steuern, speichert der Kampagnenverwaltungsservice 40 die oben genannten Kampagnendaten und hält wichtige Informationen über den Haushalt bereit, der von der Kampagne angesprochen wird. Solche Informationen können im Falle der oben genannten Unwetterwarnung beispielsweise das Alter der Haushaltsmitglieder oder ähnliches sein, um anhand der Reaktion des Teilnehmers oder Zuschauers abzuschätzen, wie dringend eventuell erforderliche Notfallmaßnahmen im Falle einer Nichtbetätigung der CTA-Taste 26 sein könnten.

Der Kampagnenverwaltungsservice 40 kommuniziert auch mit anderen Komponenten der Set-Top-Box 10, um die Kampagne zu steuern. Im vorliegenden Fall umfasst dies eine Kommunikationsschnittstelle zur Fernbedienung 6, die als BLE-Schnittstelle 42 bezeichnet wird, eine Kommunikationsschnittstelle zum Bildschirm 8, die als HDMI-Schnittstelle 44 bezeichnet wird, und das eigentliche Betriebssystem der Set-Top-Box 10, das in der Regel, aber nicht zwingend, als Android-Betriebssystem 46 ausgeführt ist.

Über die BLE-Schnittstelle 42 sendet der Kampagnenverwaltungsservice 40 in dem Übertragungssignal 24 die Aufforderung an den Zuschauer oder Teilnehmer, die CTA-Taste 26 zu drücken. Die CTA-Taste 26 kann vorzugsweise variabel gestaltet sein, und der Kampagnenverwaltungsservice 40 kann neben der Aufforderung auch ein Bild senden, wie die CTA-Taste 26 speziell für die Kampagne gestaltet sein soll. Der Kampagnenverwaltungsservice 40 wartet dann auf eine Antwort von der Fernbedienung 6, ob die CTA-Taste 26 auf der Fernbedienung 6 tatsächlich gedrückt wurde. Bei Erhalt einer Antwort kann der Kampagnenverwaltungsservice 40 einen Zeitstempel erfassen, der die Betätigung der CTA-Taste 26 dokumentiert, was nachstehend als RCU-Ereignis (Remote Control Unit Ereignis) bezeichnet wird. Alternativ oder zusätzlich kann der Kampagnenverwaltungsservice 40 auch einen Zeitstempel erfassen, der dokumentiert, an welcher Stelle sich das Video befindet. Im Gegensatz zum RCU-Ereignis wird dieses Ereignis als DMB-Ereignis (Digital Multimedia Broadcasting Ereignis) bezeichnet. Die BLE-Schnittstelle 42 kann grundsätzlich jedes geeignete Übertragungsprotokoll verwenden, muss jedoch so ausgeführt sein, dass eine bidirektionale Kommunikation möglich ist.

Eine bidirektionale Kommunikation ist für die HDMI-Schnittstelle 44 nicht unbedingt erforderlich. Über die HDMI-Schnittstelle 44 sendet der Kampagnenverwaltungsservice 40 lediglich Daten an den Bildschirm 8, ohne auf eine Rückmeldung zu warten. Die über die HDMI-Schnittstelle 44 gesendeten Daten umfassen beim Starten einer Kampagne die Aufforderung, die CTA-Taste 26 zu betätigen, die in Form der Abbildung 28 des CTA-Buttons 26 auf dem Bildschirm 8 angezeigt wird und über das Video 14 gelegt ist. Der Kampagnenverwaltungsservice 40 kann über die HDMI-Schnittstelle 44 auch Hintergrundinformationen zur Kampagne und weitere Daten an den Bildschirm 8 senden, falls dies erforderlich ist. Schließlich blendet der Kampagnenverwaltungsservice 40 alle diese Daten zu einem geeigneten Zeitpunkt aus, beispielsweise nach Betätigung des CTA-Buttons 26 oder nach Abschluss einer Kampagne.

Abschließend kann der Kampagnenverwaltungsservice 40 auch in das Android-Betriebssystem 46 eingreifen, um beispielsweise automatisch Videos abzuspielen, Programme zu starten oder zu installieren oder Kommunikationskanäle aufzubauen, beispielsweise um eine Telefonverbindung herzustellen. Die Auswahl hängt vom Anwendungszweck ab. Im Falle der oben genannten Unwetterwarnung könnte beispielsweise eine Videokommunikationsverbindung aufgebaut werden, wenn der Teilnehmer ein bestimmtes Alter erreicht hat und möglicherweise Hilfe benötigt, um die erforderliche Hilfe telefonisch zu koordinieren.

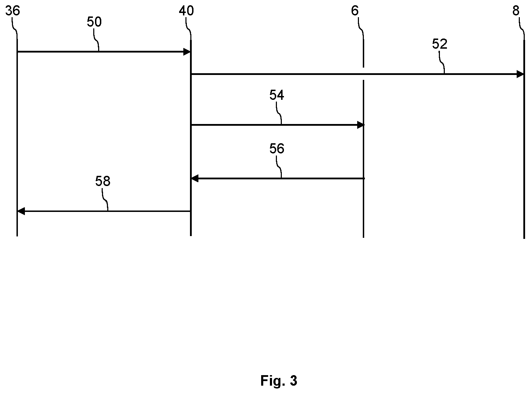

Um den Nachrichtenfluss während einer Kampagne zu verdeutlichen, wird auf das Sequenzdiagramm in Fig. 3 Bezug genommen.

Zunächst sendet das Steuersystem 36 eine Push-Nachricht 50 an den Kampagnenverwaltungsservice 40 in der Set-Top-Box 10 des jeweiligen Teilnehmersystems 2. Diese Nachricht enthält alle erforderlichen Informationen, um eine Kampagne dem Zuschauer oder Teilnehmer darzustellen und ihn aufzufordern, die CTA-Taste 26 zu betätigen. In Reaktion auf diese Push-Nachricht 50 generiert der Kampagnenverwaltungsservice 40 einen Push-Befehl 52 und eine Gestaltungsanweisung 54. Der Push-Befehl 52 enthält neben optionalen Hintergrundinformationen zur Kampagne, wie beispielsweise der Unwetterwarnung, die Aufforderung, die CTA-Taste 26 zu betätigen, sowie die Abbildung 28 der CTA-Taste 26, die über das Video 14 gelegt werden soll, und wird an den Bildschirm 8 gesendet. Parallel dazu enthält die Gestaltungsanweisung 54 ebenfalls die Abbildung 28 der CTA-Taste 26, zusammen mit Anweisungen zur Darstellung auf der Fernbedienung, sofern erforderlich. Die Gestaltungsanweisung kann von der Abbildung abweichen und beispielsweise die CTA-Taste 26 nur beleuchten oder ähnliches.

Anschließend wartet der Kampagnenverwaltungsservice 40 auf eine Rückmeldung 56 von der Fernbedienung 6, ob die CTA-Taste 26 tatsächlich betätigt wurde, und sendet eine Bestätigungsnachricht 58 an das Steuersystem 36, um die Betätigung der CTA-Taste zu bestätigen.

## Patentansprüche

1. Verfahren zum Benachrichtigen eines Benutzers über ein Ereignis (14) umfassend die Schritte:
- Empfangen einer auf dem Ereignis (14) basierenden Push-Nachricht (50) mit einer Gestaltungsinformation (28), die die Gestaltung einer CTA-Taste (26) genannten Call-To-Action-Taste auf einer Fernbedienung (6) zumindest bereichsweise beschreibt;
- Generieren eines Push-Befehls (52), mit dem ein Signalgeber (8) angewiesen wird, den Benutzer aufzufordern, die CTA-Taste (26) auf der Fernbedienung (6) zu bedienen; und
- Generieren einer Gestaltungsanweisung (54), mit der die Fernbedienung (6) angewiesen wird, die Fernbedienung (6) im Bereich der CTA-Taste (26) basierend auf der Gestaltungsinformation (28) zu gestalten;
- Versenden des Push-Befehls (52) an den Signalgeber (8);
- Versenden der Gestaltungsanweisung (54) an die Fernbedienung (6); und
- Versenden einer die Bedienung der CTA-Taste (26) durch den Benutzer anzeigenden Nachricht (58) an ein Steuersystem (36).

2. Verfahren nach Anspruch 1, wobei der Push-Befehl (52) die Gestaltungsinformation (28) umfasst und ein Bildschirm als Signalgeber (8) angewiesen wird, ein Bild der CTA-Taste (26) abzubilden.

3. Verfahren nach Anspruch 2, wobei das Bild der CTA-Taste (26) über ein anderes Bild auf dem Bildschirm überlagert wird.

4. Verfahren nach einem der vorstehenden Ansprüche, umfassend Ausführen eines Programms auf den Empfang der Bedienungsrückmeldung (56) hin.

5. Verfahren nach Anspruch 4, wobei das Programm in Abhängigkeit von den Benutzer identifizierenden Daten ausgeführt wird.

6. Verfahren nach einem der vorstehenden Ansprüche, umfassend Versenden einer basierend auf der Bedienungsrückmeldung (56) erzeugten Nachricht (58) an einen Server (36).

7. Verfahren nach einem der vorstehenden Ansprüche, wobei die Bedienungsrückmeldung (56) Informationen zu einem Multimedia-Content umfasst, der auf dem Bildschirm unmittelbar vor der Abbildung der CTA-Taste (26) wiedergegeben wird, wobei der Server (36) vorzugsweise zuvor die auf dem Ereignis basierenden Push-Nachricht (50) versendet hat.

8. Steuervorrichtung (40), die eingerichtet ist, ein Verfahren nach einem der vorstehenden Ansprüche auszuführen.

9. Fernbedienung zur Kommunikation mit einer Steuervorrichtung nach Anspruch 8, umfassend:
- eine CTA-Taste (26) genannte Call-To-Action-Taste;
- eine Kommunikationsvorrichtung zum Empfang der Gestaltungsanweisung (54); und
- einen Aktuator zum Gestalten der Fernbedienung (6) im Bereich der CTA-Taste (26) basierend auf der Gestaltungsinformation (28).

10. System umfassend:
- eine Steuervorrichtung (40) nach Anspruch 8,
- die Fernbedienung (6) nach Anspruch 9, und
- den Signalgeber (8).
